# EUROPÄISCHE PATENTSCHRIFT

(11) **EP 1 887 242 B1**
(45) Veröffentlichungstag und Bekanntmachung des Hinweises auf die Patenterteilung: **19.06.2013**
(21) Anmeldenummer: 07013661.9
(22) Anmeldetag: 12.07.2007
(51) Int. Cl.: F16D 25/08

(54) **Einrichtung zur pneumatischen Betätigung einer Fahrzeugkupplung**
Device for pneumatic actuation of a vehicle clutch
Dispositif destiné à l'actionnement pneumatique d'un embrayage de véhicule

(30) Priorität: 09.08.2006 DE 102006037140
(43) Veröffentlichungstag der Anmeldung: 13.02.2008
(73) Patentinhaber: Schaeffler Technologies AG & Co. KG, 91074 Herzogenaurach (DE)
(72) Erfinder: Heitbaum, Markus, 77830 Bühlertal (DE)

(56) Entgegenhaltungen:
- DE-A1- 10 323 953
- DE-U1- 8 422 431
- FR-A1- 2 757 590
- FR-A1- 2 786 836
- US-A1- 2001 030 097
- US-B1- 6 354 188

## Beschreibung

Die vorliegende Erfindung betrifft eine Einrichtung zur pneumatischen Betätigung einer Fahrzeugkupplung, mit einem Zylinder und einem relativ zum Zylinder verlagerbarem Kolben, der an einem Führungsrohr axial geführt ein Kupplungslager zur Betätigung der Kupplung beaufschlägt und bei der zwischen Kolben und Zylinder eine den Kolben in Richtung zur Kupplungsbetätigung vorspannende Federeinrichtung angeordnet ist.

Bei einer solchen pneumatisch betätigten Einrichtung kann es sich beispielsweise um einen Zentralausrücker zum Öffnen einer Kupplung eines Fahrzeugs handeln, die vom Typ normal geschlossen ist, die also in der nicht betätigten Stellung beispielsweise mittels einer Tellerfeder zugedrückt ist. Ein solcher pneumatisch betätigter Zentralausrücker kann beispielsweise an einem Fahrzeug mit einer Druckluftanlage Einsatz finden, also beispielsweise einem Lastkraftwagen.

Die FR 2 786 836 A1 zeigt einen Nehmerzylinder zur hydraulischen Betätigung einer Kupplung mit einem Zylinder und einem relativ zum Zylinder verlagerbaren Kolben, der ein Kupplungslagr zur Betätigung der Kupplung beaufschlagt und bei den zwischen Kolben und Zylinder eine vorspannende Federeinrichtung angeordnet ist, wobei das Zylindergehäuse und einstückig mit einem Führungsrohr aus Kunststoff ausgebildet ist.

Die US 6,415,900 B1 beschäftigt sich allgemein mit Nehmerzylindern für Kupplungsausrückersysteme und zeigt explizit hydraulische Nehmerzylinder mit einem Kolben und einem Zylindergehäuse, der auf einem metallischen Führungsrohr angeordnet sind, wobei das Zylindergehäuse aus Kunststoff gefertigt ist und zwischen dem Zylindergehäuse und dem Kolben eine Vorspannfeder angeordnet ist.

Anhand der DE 103 14 961 A1 ist eine Betätigungseinrichtung für eine Fahrzeugkupplung bekannt geworden, die einen Zylinder besitzt und einen relativ zum Zylinder verlagerbaren Kolben, der an einem Führungsrohr axial geführt ist und ein Kupplungslager zur Betätigung der Kupplung beaufschlägt. Zudem besitzt diese bekannte Betätigungseinrichtung eine Druckfeder, die den Kolben in Richtung zur Kupplungsbetätigung hin mit Vorlast beaufschlägt.

Bei dem Zylinder dieser bekannten Betätigungseinrichtung handelt es sich um ein Blechgehäuse, das an seiner Innenseite eine Kolbenlaufbahn ausbildet, wobei der Kolben ein Ringkolben ist und mit seinem Innendurchmesser an dem Führungsrohr axial geführt ist. Um nun eine Zentrierung zwischen dem Führungsrohr und dem Blechgehäuse zu erreichen, wird das Führungsrohr in einen langgestreckten Stutzen des Blechgehäuses eingesetzt und dort mittels einer Schweißverbindung festgelegt.

Bei dem Führungsrohr handelt es sich um ein gezogenes Präzisionsstahlrohr, welches mittels der genannten Schweißverbindung mit dem Blechgehäuse verbunden wird. Durch die starke Erhitzung beim Schweißen besteht die Gefahr eines thermischen Verzugs des Führungsrohrs und darüber hinaus führt die Schweißverbindung zu Korrosionsproblemen am Führungsrohr. Auch muss das Führungsrohr, da es zur Zentrierung in den Stutzen des Blechgehäuses eingesetzt wird, eine Längserstreckung besitzen, die deutlich größer ist, als die für die Bildung der Kolbenlaufbahn erforderliche Längserstreckung, so dass dies zu einem erhöhten Materialaufwand führt.

Wird die bekannte Betätigungseinrichtung im Rahmen einer Serienfertigung gefertigt, so ist in eine Fertigungsstraße zur automatischen Fertigung ein Schweißautomat zu integrieren, was regelmäßig zu deutlichem Rüstmehraufwand führt. Zudem handelt es sich bei dem Raum zwischen dem Kolben und dem Zylinder um einen Druckraum, der von der Schweißnaht als Dichtnaht abgedichtet werden muss, so dass ein Nachweis über die Dichtheit der Schweißnaht zu führen ist, weshalb in der Serienfertigungsanlage zusätzlich eine Anlage zur Röntgenprüfung installiert werden muss. Auch dies erhöht den Rüstaufwand und damit die Kosten der Fertigung der bekannten Betätigungseinrichtung erheblich.

Ausgehend hiervon liegt der vorliegenden Erfindung nunmehr die Aufgabe zugrunde, eine Einrichtung zur pneumatischen Betätigung einer Fahrzeugkupplung zu schaffen, die kostengünstig und wirtschaftlicher herzustellen ist, als die bekannte Betätigungseinrichtung und den Fertigungsaufwand deutlich verringert. Dabei soll auch der Trockenlauf des Kolbens an der Kolbenlaufbahn sowie die radial innenliegende Abdichtung des Druchraums zwischen Kolben und Zylinder gewährleistet sein.

Die Erfindung weist nunmehr zur Lösung dieser Aufgabe eine Einrichtung mit den Merkmalen des Anspruchs 1 auf. Vorteilhafte Ausgestaltungen hiervon sind in den weiteren Ansprüchen beschrieben.

Die Erfindung schafft nunmehr eine Einrichtung zur pneumatischen Betätigung einer Fahrzeugkupplung, die einen Zylinder und einen relativ zum Zylinder verlagerbaren Kolben aufweist, der an einem Führungsrohr axial geführt ein Kupplungslager zur Betätigung der Kupplung beaufschlägt und zwischen Kolben und Zylinder eine den Kolben in Richtung zur Kupplungsbetätigung vorspannende Federeinrichtung angeordnet ist, wobei das Führungsrohr und der Zylinder einstückig aus einem Kunststoffwerkstoff ausgebildet sind und auch der Kolben aus einem Kunststoffwerkstoff ausgebildet ist.

Das Führungsrohr bildet dabei eine rohrstückförmige Innenwand des mit einem rohrstückförmigen Außengehäuse versehenen Zylinders und die Innenwand und das Außengehäuse bilden zusammen eine Kolbenlaufbahn für den Kolben. Zwischen dem Zylinder und dem Kolben bildet sich ein für die Druckbeaufschlagung des Kolbens mit beispielsweise Druckluft aus der Druckluftanlage des Fahrzeugs befüllbarer Druckraum aus, der einen großen Bauraum einnimmt und ohne Trennstellen hergestellt ist und aufgrund seiner Ausgestaltung aus einem Kunststoffwerkstoff eine deutliche Gewichtsersparnis gegenüber der bekannten Betätigungseinrichtung zum Vorteil hat und darüber hinaus aufgrund des Wegfalls einer Schweißverbindung zwischen dem Führungsrohr und dem Außengehäuse einfach montiert werden kann. So kann mit der erfindungsgemäßen Einrichtung gegenüber der bekannten Kupplungsbetätigungseinrichtung ein Gewichtsvorteil von etwa 40 Prozent erreicht werden.

Es ist bei dieser erfindungsgemäßen Einrichtung zur pneumatischen Betätigung der Fahrzeugkupplung vorgesehen, dass sowohl Kolben als auch Zylinder aus einem Kunststoffwerkstoff gefertigt sind. Um nun die Möglichkeit eines Trockenlaufs beziehungsweise eines Laufs des Kolbens an der Kolbenlaufbahn mittels einer Dauerschmierung zu gewähren, ist es gemäß der Erfindung vorgesehen, dass zwischen Kolben und Führungsrohr eine Gleithülse angeordnet ist, die zumindest im Kontaktbereich mit dem Führungsrohr aus einem relativ zum Kunststoffwerkstoff des Führungsrohrs nicht abrasiven Kunststoffwerkstoff ausgebildet ist.

Bei dem Kunststoffwerkstoff für den Zylinder beziehungsweise das Führungsrohr und den Kolben kann es sch um einen faserverstärkten, insbesondere glasfaserverstärkten Kunststoffwerkstoff handeln auf der Basis eines teilkristallinen, partiell aromatischen Polyamids, insbesondere PA 6T/X, der von EMS-Chemie (Deutschland) GmbH unter der Bezeichnung Grivory® HTV-5H1 verfügbar ist. Die Gleithülse nun kann in ihrem Kontaktbereich mit dem Führungsrohr aus einem Kunststoffwerkstoff ohne Glasfaserkomponente zur Vermeidung einer abrasiven Wirkung am Führungsrohr ausgebildet sein.

Der Kolben der erfindungsgemäßen Einrichtung wird beispielsweise über Druckluft aus der Druckluftanlage eines Fahrzeugs betätigt und weist zu diesem Zweck einen mit Versteifungsrippen versehenen Kolbenboden auf und besitzt zwischen Kolbenboden und Außengehäuse des Zylinders einen Nutdichtring und einen Abstreifer, die einerseits für einen fluiddichten Dichtraum sorgen und andererseits für eine Beseitigung von etwaigen an der Kolbenlaufbahn anhaftender Schmutzpartikel, da die erfindungsgemäße Einrichtung - wenn sie beispielsweise an einem Nutzfahrzeug verwendet wird - in einer rauen Umgebung eingesetzt wird.

Bei dem Kolben handelt es sich um einen Ringkolben, dessen radial innen liegende Ausnehmung beispielsweise von einer Getriebeeingangswelle eines Getriebes des Fahrzeugs durchsetzt wird.

Die radial innen liegende Kolbenfläche läuft über die Gleithülse an dem Führungsrohr axial geführt und wird von einer Federeinrichtung in Richtung der Beaufschlagung der Kupplung axial vorgespannt. Gemäß der Erfindung ist zwischen dem Kolben und der Federeinrichtung nunmehr ein Haltering vorgesehen, der einen den Zylinder gegen das Führungsrohr abdichtenden Nutdichtring gegen die Gleithülse vorspannt, so dass der Druckraum zwischen Kolben und Zylinder auch radial innen liegend abgedichtet ist.

Zur Beseitigung etwaiger auch an der radial innen liegenden Kolbenlaufbahn anhaftender Schmutzpartikel ist es nach einer Weiterbildung der Erfindung vorgesehen, dass die Gleithülse einen mit dem Führungsrohr in Kontakt angeordneten Abstreifer gegen den Kolben beaufschlägt, so dass die Axialbewegung des Kolbens an dem Führungsrohr zu einem Abstreifen etwaiger Schmutzpartikel an der radial innen liegenden Kolbenlaufbahn führt.

Die bekannte Betätigungseinrichtung besitzt kupplungsseitig an dem Führungsrohr einen Endanschlag in der Form eines Sicherungsrings angeordnet, der in einer an dem Führungsrohr ausgebildeten umlaufenden Nut angeordnet ist.

Wird nun der Kolben der bekannten Betätigungseinrichtung auf das Führungsrohr aufgesetzt, so muss die Kolbengleitfläche des Kolbens die Nut passieren und unterliegt dort einer Gefahr einer Beschädigung. Muss der Kolben der bekannten Betätigungseinrichtung beispielsweise zu Wartungszwecken von dem Führungsrohr abgenommen werden, so muss zu diesem Zweck der Sicherungsring entfernt werden und der Bewegung des Kolbens in Richtung des Endes des Führungsrohrs steht eine umlaufende scharfe Kante der Umlaufnut entgegen, die unweigerlich zur Beschädigung der Kolbengleitfläche des Kolbens führt.

Um nun diese Problematik zu beseitigen, ist es nach einer Weiterbildung der Erfindung vorgesehen, dass am kupplungsseitigen Endbereich des Führungsrohrs ein einen Endanschlag für die Kolbenverlagerung bildender Anschlagring angeordnet ist, der aber nicht, wie dies bei der bekannten Betätigungseinrichtung der Fall ist, mittels einer außen angeordneten Umlaufnut festgelegt wird, sondern beispielsweise mittels eines kalt verformenden Umformvorgangs am Führungsrohr festgelegt werden kann, beispielsweise einen Bördelrand besitzt, der das Führungsrohr nicht von außen, sondern von innen umgreift, so dass das Führungsrohr außen glatt ausgebildet ist und keine Umlaufkante bildet, die einer Bewegung des Kolbens über das Ende des Führungsrohrs - beispielsweise zu Wartungsarbeiten - entgegensteht.

Nach einer Weiterbildung der Erfindung ist es vorgesehen, dass am Außengehäuse radial außen im Abstand zueinander angeordnete umlaufende Versteifungsrippen vorgesehen sind und an einem, eine Fläche zur Anordnung der Einrichtung an einem Getriebe bildenden Boden des Zylinders radial sternförmig nach innen verlaufende Versteifungsrippen, die für einen hochfesten Zylinder sorgen, der der Druckbeaufschlagung mit Druckluft standhält.

Neben dieser vorstehend beschriebenen Ausführungsform schafft die Erfindung auch eine Einrichtung zur pneumatischen Betätigung einer Fahrzeugkupplung, bei der das Führungsrohr und der Zylinder einstückig aus einem Aluminiumwerkstoff ausgebildet sind und auch der Kolben aus einem Aluminiumwerkstoff ausgebildet ist.

Das Führungsrohr kann dabei eine rohrstückförmige Innenwand des mit einem rohrstückförmigen Außengehäuse versehenen Zylinders bilden und die Innenwand und das Außengehäuse bilden eine Kolbenlaufbahn, wobei das Außengehäuse als spanend nachgearbeitetes Schmiedeteil aus Aluminium gefertigt sein kann und der Kolben mittels eines Fließpressvorgangs spanend nachbearbeitet gefertigt sein kann. Auch bei dieser Ausführungsform sind daher Führungsrohr und Zylinder einstückig ausgebildet ohne nachträglich zu verfügende Trennstellen, wie dies bei der bekannten Betätigungseinrichtung der Fall ist, weshalb die Bearbeitungsschritte zum nachträglichen Verfügen wegfallen und darüber hinaus auch nicht die Gefahr undichter Trennstellen besteht.

Es hat sich gezeigt, dass bei der bekannten Betätigungseinrichtung bei einer mehrteiligen Ausbildung des Druckraums aus Außengehäuse und Führungsrohr die Schweißnaht zwischen dem Führungsrohr und dem Außengehäuse aus den vorstehend genannten Gründen problematisch ist.

Um nun auch die Möglichkeit einer Bildung des Druckraums in nicht einstückiger Weise zu schaffen, ist es nach einer Weiterbildung der Erfindung vorgesehen, dass die Einrichtung zur pneumatischen Betätigung einer Fahrzeugkupplung einen Zylinder besitzt, der von einem querschnittlich U-förmigen Ringbauteil mit einer mittigen Ausnehmung gebildet ist, in der das Führungsrohr mittels eines kalt verformenden Umformvorgangs festgelegt ist. Auf diese Weise ist es beispielsweise möglich, mittels einer Umbördelung des motorseitigen Endbereichs des Führungsrohrs einen vom U-förmigen Ringbauteil und dem Führungsrohr gebildeten Aufnahmeraum für den Kolben zu schaffen.

Das Führungsrohr bildet dabei eine rohrstückförmige Innenwand des mit einem rohrstückförmigen Außengehäuse in der Form des querschnittlich U-förmigen Ringbauteils versehenen Zylinders und die Innenwand und das Außengehäusen bilden eine Kolbenlaufbahn, wobei das Ringbauteil beispielsweise mittels eines Fließpressvorgangs spanend nachbearbeitet gefertigt sein kann und der Kolben ebenfalls mittels eines Fließpressvorgangs spanend beispielsweise aus einer Aluminiumlegierung gefertigt sein kann.

Schließlich ist es nach einer Weiterbildung der Erfindung zur Schaffung eines aus mehreren Bestandteilen zusammengesetzten Druckraums des Zylinders vorgesehen, dass der Zylinder von einem kreisringförmigen Boden und einem zylinderförmigen Außenring sowie dem Führungsrohr gebildet ist.

Dabei kann der Außenring am Außenumfang des Bodens und das Führungsrohr am Innenumfang des Bodens ebenfalls mittels eines kalt verformenden Umformvorgangs festgelegt sein und der Außenring sowie das Führungsrohr dabei eine Kolbenlaufbahn bilden. Hier ist es beispielsweise möglich, den Boden mittels eines Schmiedevorgangs aus einem Aluminiumwerkstoff herzustellen, an dem sowohl der Außenring als auch das Führungsrohr mittels eines Bördelvorgangs festgelegt werden können, so dass keine zu einem Temperaturverzug der Kolbenlaufbahn führenden Schweißvorgänge notwendig sind.

Bei aus einem metallischen Werkstoff, wie beispielsweise einem Aluminiumwerkstoff oder aus einem Edelstahl gebildetem Führungsrohr und einem ebenfalls aus einem metallischen Werkstoff, wie beispielsweise einem Aluminiumwerkstoff gebildeten Kolben ist es nach einer Weiterbildung der Erfindung vorgesehen, dass der Kolben an seiner dem Führungsrohr zugewandten Innenwand mittels Führungsbändern aus vorzugsweise PTFE (Polytetrafluorethylen) am Führungsrohr anliegt und relativ zum Führungsrohr verlagert werden kann, so dass zwischen dem Führungsrohr und der Kolbeninnenlaufbahn des Ringkolbens keine Abrasionswirkung entsteht.

Der Ringkolben kann nach einer Weiterbildung der Erfindung an seiner der Kolbenlaufbahn zugewandten Innenwand und Außenwand jeweils mindestens einen Nutdichtring sowie einen Abstreifer besitzen, der einerseits für eine Abdichtung des Druckraums sorgt und andererseits für eine Beseitigung etwaiger an der Kolbenlaufbahn anhaftender Schmutzpartikel.

Bei der mittels eines U-förmigen Ringbauteils und dem Führungsrohr in der mittigen Ausnehmung des Ringbauteils gebildeten Konfiguration ist es nach einer Weiterbildung der Erfindung vorgesehen, dass das Führungsrohr einen Absatz aufweist, mittels dem es am Ringbauteil zur Anlage gebracht werden kann. Um nun das Problem scharfkantiger Endbereiche des Führungsrohrs zu vermeiden, kann das Führungsrohr einen mittels eines kalt verformenden Umformvorgangs gebildeten Endanschlag für den Kolben besitzen.

Wie es vorstehend bereits erwähnt wurde, ist die erfindungsgemäße Einrichtung beispielsweise zur Verwendung an einem Nutzfahrzeug vorgesehen mit entsprechend rauer Arbeitsumgebung. Um nun diesen rauen Einsatzbedingungen widerstehen zu können, ist es nach einer Weiterbildung aller vorstehend beschriebenen Ausführungsformen vorgesehen, dass ein Schmutzschutzring die Kolbenlaufbahn topfförmig übergreift und der Schmutzschutzring zwischen Kolben und einem vom Kolben beaufschlagten Lagerring des Kupplungslagers festgelegt ist und sich zwischen einer Zylinderaußenwand und einer Innenwand des Schmutzschutzrings ein Schmutzabstreifer beispielsweise in der Form eines Filzrings angeordnet befindet.

Erfährt nun der Kolben entlang der Kolbenlaufbahn eine Verlagerungsbewegung, so führt dies ebenfalls zu einer Verlagerungsbewegung des Schmutzschutzrings, so dass der an der Zylinderaußenwand festgelegte Filzring entlang der Innenwand des Schmutzschutzrings entlang streift und gegen den Schmutzschutzring abdichtet, so dass Schmutzpartikel am Eindringen in den Raum innerhalb des Schmutzschutzrings gehindert werden.

Die Erfindung wird im Folgenden anhand der Zeichnung näher erläutert. Diese zeigt in:
Fig 1 eine Schnittdarstellung einer ersten Ausführungsform einer Einrichtung zur pneumatischen Betätigung einer Kupplung nach der vorliegenden Erfindung;
Fig. 2 eine Schnittdarstellung einer zweiten nicht erfingungsgemäßen Ausführungsform;
Fig. 3 eine Schnittdarstellung einer dritten nicht erfingungsgemäßen Ausführungsform; und
Fig. 4 eine Schnittdarstellung einer vierten nicht erfingungsgemäßen Ausführungsform.

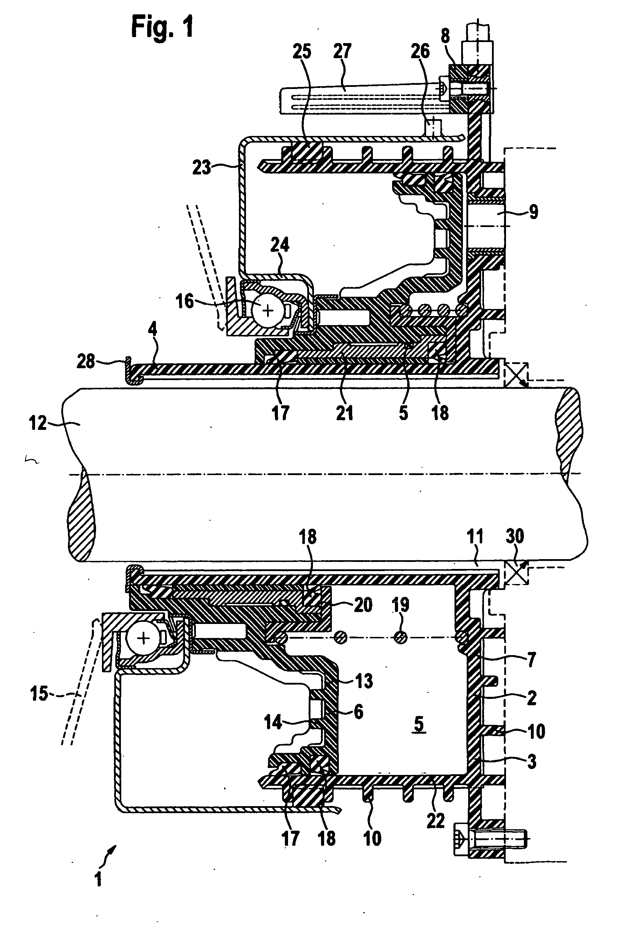

Fig. 1 der Zeichnung zeigt eine Schnittdarstellung einer ersten Ausführungsform einer erfindungsgemäßen Kupplungsbetätigungseinrichtung, die zur insbesondere pneumatischen Betätigung vorgesehen ist.

Die dargestellte Kupplungsbetätigungseinrichtung 1 weist ein einstückig ausgebildetes Gehäuse 2 auf, das gleichzeitig den Zylinder 3 und das Führungsrohr 4 bildet. Innerhalb des Gehäuses 2 ist ein Druckraum 5 für die Beaufschlagung eines am Führungsrohr 4 axial geführten Kolbens 6 ausgebildet.

Der Zylinder 3 und das Führungsrohr 4 sind aus PA 6T/6I-GF50 gebildet, einem glasfaserverstärktem Kunststoffwerkstoff, der unter der Bezeichnung Grivory® HTV-5H1 von der EMS-Chemie (Deutschland) AG erhältlich ist und einen Glasfaseranteil von 50 Gewichtsprozent besitzt. Es handelt sich dabei um einen im vorliegenden Anwendungsbereich von - 40° C bis + 120° C thermisch stabilen Kunststoff, der auch zur Fertigung des Kolbens 6 verwendet werden kann.

An dem Boden 7 des Zylinders 3 sind Abstandshülsen 8 zur Aufnahme von Schrauben oder dergleichen vorgesehen, mittels der die Einrichtung an einer Flanschfläche eines Getriebegehäuses oder dergleichen befestigt werden kann. Auch ist am Boden 7 eine Öffnung 9 für die Befüllung des Druckraums 5 des Zylinders 3 ausgebildet. In der Öffnung 9 kann beispielsweise mittels eines Ultraschallschweißvorgangs ein Gewindeeinsatz für einen Druckluftanschluss festgelegt werden.

Am Außenumfang des Zylinders 3 sind im Abstand zueinander angeordnete radial verlaufende Versteifungsrippen 10 vorgesehen. Auch am Boden 7 sind Versteifungsrippen 10 vorgesehen, die sternförmig in Richtung nach innen gerichtet zu einem Durchlass 11 verlaufen, der von einer Getriebeeingangswelle 12 eines nicht näher dargestellten Getriebes durchsetzt wird. Die Versteifungsrippen 10 sorgen dafür, dass das Gehäuse 2 innerhalb des vorstehend beschriebenen Temperaturbereichs üblichen Betriebsdrücken von beispielsweise bis zu 10 bar von Druckluftanlagen von Nutzfahrzeugen standhält.

Der Kolben 6 weist einen Kolbenboden 13 mit Versteifungsrippen 14 auf und kann von dem im Druckraum 5 herrschenden Druck in Richtung zur Beaufschlagung einer gestrichelt dargestellten Tellerfeder 15 einer nicht dargestellten Kupplung beaufschlagt werden. Die in der Zeichnungsebene obere Darstellung der Fig. 1 entspricht dabei der Stellung des Kolbens 5 relativ zum Zylinder bei einer geschlossenen Kupplung, während die in der Zeichnung in Fig. 1 untere Zeichnungshälfte die beaufschlagte Stellung des Kolbens 5 zeigt, bei der dieser also über ein Kupplungslager 16 die Tellerfeder 15 zum Öffnen der Kupplung beaufschlagt.

Der Kolben 6, bei dem es sich um einen Ringkolben handelt, besitzt an seinem Außenumfang einen Abstreifer 17 zum Abstreifen etwaiger Schmutzpartikel von der am Zylinder 3 gebildeten Kolbenlaufbahn sowie einen Nutdichtring 18, der dem Abdichten des Druckraums 5 dient. Der Kolben 6 wird von einer Federeinrichtung 19 in Richtung der Beaufschlagung der Tellerfeder 15 vorgespannt, wobei die Federeinrichtung einen Haltering 20 beaufschlägt, der einen Nutdichtring 18 gegen eine Gleithülse 21 drückt, die zumindest im Kontaktbereich mit dem Führungsrohr 4 aus einem nicht abrasiven Kunststoffwerkstoff gebildet ist und für eine Gleitbewegung des Kolbens 6 am Führungsrohr 4 sorgt.

Der Kolben 6 weist darüber hinaus an seiner dem Führungsrohr 4 zugewandten Innenseite einen Abstreifer 17 auf, der zum Abstreifen etwaiger am Führungsrohr 4 außen anhaftender Schmutzpartikel vorgesehen ist.

Der Druckraum 5, der Kolben 6 und der Zylinder 3 mit seinem rohrstückförmigen Außengehäuse 22 werden von einem Schmutzschutzring 23 topfförmig übergriffen. Der Schmutzschutzring 23 befindet sich dabei mit einem Bund 24 zwischen dem Kolben 6 und dem Kupplungslager 16 eingeklemmt und übergreift das Außengehäuse 22.

Am Außengehäuse 22 ist ein Schmutzabstreifer in der Form beispielsweise eines Filzrings 25 vorgesehen, so dass der topfförmige Schmutzschutzring 23 mit seiner Innenwand an dem Filzring 25 entlang geführt wird, wenn sich der Kolben 6 aus der in der oberen Hälfte der Zeichnung der Fig. 1 dargestellten Stellung mit minimaler Extension in die in der unteren Zeichnungshälfte der Fig. 1 dargestellten Stellung mit maximaler Extension begibt und dabei werden Schmutzpartikel vom Filzring 25 eingefangen.

Der Schmutzschutzring 23 besitzt an seinem Außengehäuse einen Permanentmagneten 26 angeordnet, der zur Wegmessung des Verfahrwegs des Kolbens 6 entlang seines Verfahrwegs vorgesehen ist und zwar zusammen mit einem am Boden 7 festgelegten Wegsensor 27.

Um den Verfahrweg des Kolbens 6 in Richtung der Tellerfeder 15 und damit der Kupplungsseite zu begrenzen, ist am kupplungsseitigen Endbereich des Führungsrohrs 4 ein Endanschlag 28 mittels einer Umbördelung festgelegt, so dass keine scharfe Kante entsteht, die bei einer Montage des Kolbens 6 oder Demontage des Kolbens 6 am Führungsrohr 4 den Kolben beschädigen könnte. Das Führungsrohr 4 weist ebenfalls Versteifungsrippen auf, die in Fig. 1 als Sichtkante am Führungsrohr 4 ersichtlich sind.

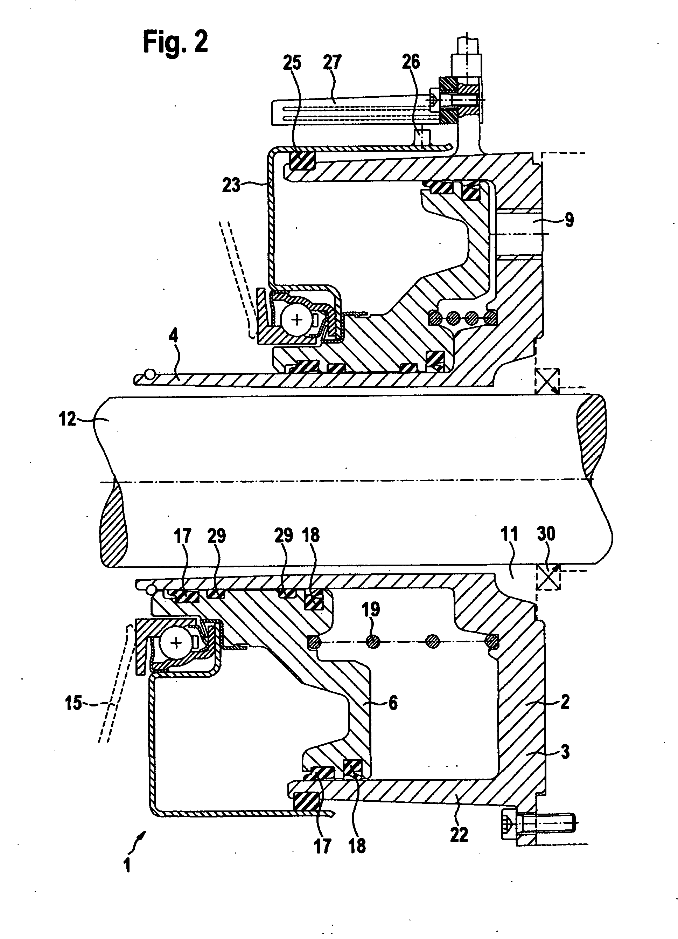

Fig. 2 der Zeichnung zeigt eine modifizierte nicht erfingungsgemäßen Ausführungsform der Kupplungsbetätigungseinrichtung 1.

Die in Fig. 2 dargestellte Ausführungsform unterscheidet sich von der in Fig. 1 dargestellten Ausführungsform im Wesentlichen dadurch, dass der Zylinder 3 mit dem rohrstückförmigen Außengehäuse 22 und dem Führungsrohr 4 aus einem Aluminiumwerkstoff gebildet ist, wiederum aber eine einstückige Konfiguration besitzt und beispielsweise mittels eines Schmiedevorgangs spanend nachbearbeitet gefertigt ist.

Der Kolben 6 ist mittels eines Fließpressvorgangs spanend nachbearbeitet gefertigt und kann ebenfalls aus einem Aluminiumwerkstoff gefertigt sein. Der als Ringkolben ausgebildete

Kolben 6 weist sowohl an seiner Außenfläche als auch an seiner Innenfläche jeweils einen Abstreifer 17 und einen Nutdichtring 18 auf.

Zudem besitzt der Kolben 6 an seiner radial innen liegenden Umfangsfläche Führungsbänder 29, die beispielsweise aus Polytetrafluorethylen (PTFE) gebildet sind und einem Verschleiß der Kontaktfläche zwischen dem Kolben 6 und dem Führungsrohr 4 vorbeugen. Auch der Kolben 6 wird von einer Federeinrichtung 19 in Richtung der Tellerfeder 15 vorgespannt und der Zylinder 3 kann mittels einer Verschraubung an einer Flanschfläche eines nicht näher dargestellten Getriebes festgelegt werden. Die Getriebeeingangswelle 12 durchsetzt die Kupplungsbetätigungseinrichtung 1 über einen Durchlass 11, in dessen Bereich ein Wellendichtring 30 - ähnlich wie bei der Ausführungsform in Fig. 1 - vorgesehen ist.

Ein Schmutzschutzring 23 übergreift den Kolben 6 und die an der Innenumfangsfläche des Außengehäuses 22 gebildete Kolbenlaufbahn, um Schmutzeintritt zu vermeiden. Am Außenumfang des rohrstückförmigen Außengehäuses ist - ähnlich wie bei der Ausführungsform in Fig. 1 - ein Filzring 25 angeordnet, der an der Innenwand des Schmutzschutzrings 23 bei dessen axialer Bewegung bei der Verlagerung des Kolbens 4 entlang streift.

Ähnlich wie bei Ausführungsform in Fig. 1 ist am Schmutzschutzring 23 ein Permanentmagnet 26 angeordnet, der zusammen mit dem Wegsensor 27 der Wegmessung des Kolbens 6 entlang seines Verfahrwegs dient.

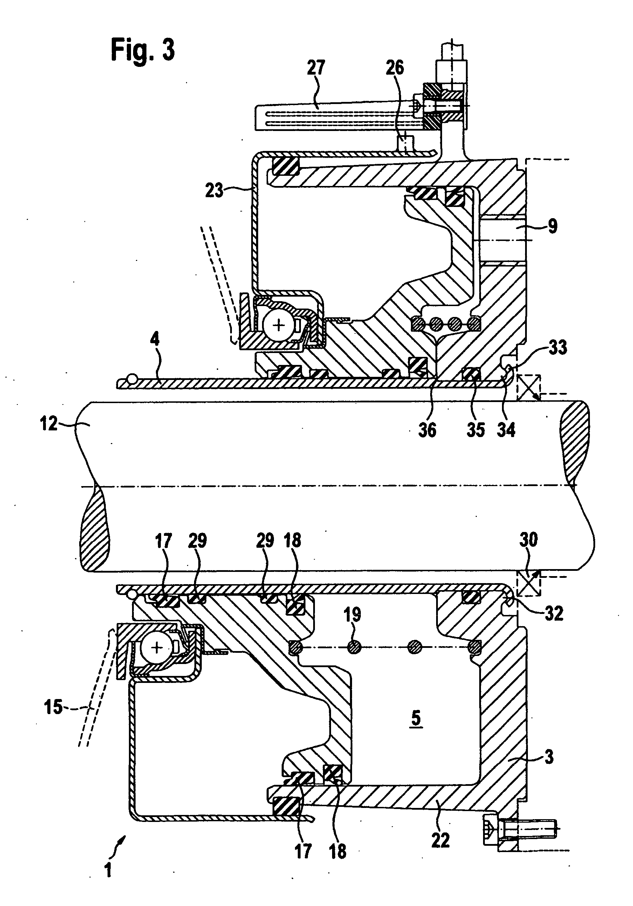

Fig. 3 zeigt eine modifizierte nicht erfingungsgemäßen Ausführungsform der Betätigungseinrichtung 1, die sich von der in Fig. 2 dargestellten Ausführungsform im Wesentlichen dadurch unterscheidet, dass der Zylinder 3 von einem im Querschnitt U-förmigen Ringbauteil und dem Führungsrohr 4 gebildet wird, so dass also Führungsrohr und Zylinder nicht einstückig ausgebildet sind, sondern das Führungsrohr 4 mittels eines kalt verformenden Umformvorgangs am Ringbauteil 31 festgelegt wird.

Zu diesem Zweck kann das Ringbauteil 31 im Bereich seiner mittigen Ausnehmung einen Bund 32 aufweisen, der als Aufnahme für eine Umbördelung 33 des Führungsrohrs 4 dient. Damit kann das Führungsrohr 4 am Ringbauteil 31 zur Bildung des Zylinders 3 so festgelegt werden, dass kein thermischer Verzug des beispielsweise aus einem Edelstahl in der Form eines gezogenen Präzisionsrohrs gebildeten Führungsrohrs 4 entsteht. Um den Druckraum 5 abzudichten, besitzt das U-förmige Ringbauteil 31 im Bereich seiner Ausnehmung 34 zur Aufnahme des Führungsrohrs 4 eine umlaufende Ringnut, in der beispielsweise ein O-Ring 35 vor der Montage des Führungsrohrs 4 eingesetzt werden kann. Um nun eine Zentrierung des Führungsrohrs 4 am Ringbauteil 31 zu erreichen, besitzt das Führungsrohr 4 einen Absatz 36, der zur Zentrierung des Führungsrohrs 4 am Ringbauteil zur Anlage kommt. Die weitere Ausgestaltung und Funktion der Kupplungsbetätigungseinrichtung 1 nach Fig. 3 entspricht derjenigen nach Fig. 2, so dass zur Vermeidung von Wiederholungen auf die Beschreibung der Fig. 2 verwiesen wird.

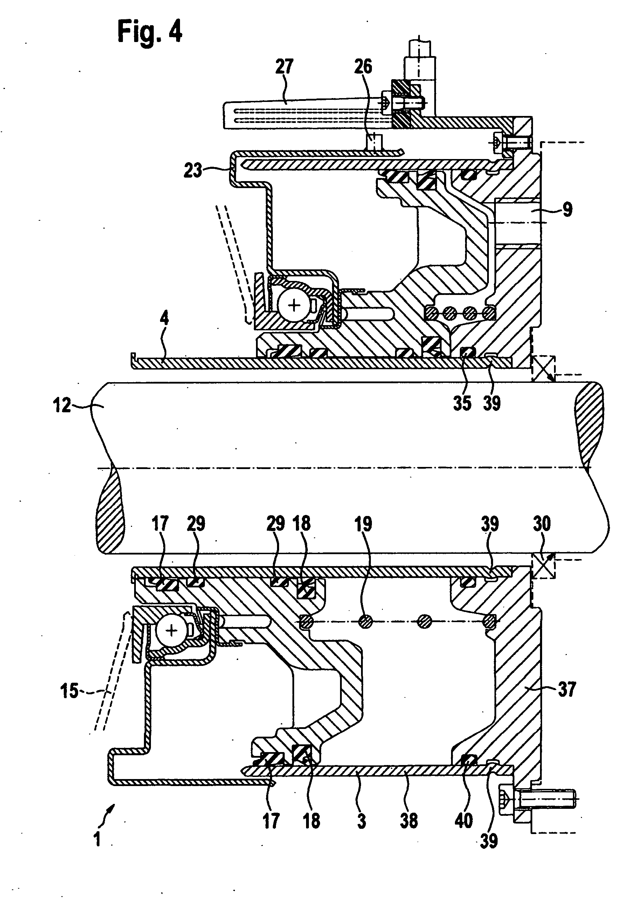

Schließlich zeigt Fig. 4 eine Schnittdarstellung einer weiteren modifizierten nicht erfingungsgemäßen Ausführungsform der Kupplungsbetätigungseinrichtung 1.

Die in Fig. 4 dargestellte Ausführungsform unterscheidet sich dabei von der in Fig. 3 dargestellten Ausführungsform im Wesentlichen dadurch, dass das Ringbauteil 31 in Wegfall geraten ist und ersetzt wird durch einen ringförmigen Boden 37, an dessen Außenumfang mittels einer kalt verformenden Umformung in der Form einer Bördelung ein Außenring 38 angeordnet ist. Das Führungsrohr 4 wird gemäß der in Fig. 4 dargestellten Ausführungsform am Innenumfang des Bodens 37 ebenfalls mittels einer Umbördelung 39 festgelegt.

Zwischen dem Führungsrohr 4 und dem Boden 37 befindet sich in einer Nut des Bodens 37 ein O-Ring 35 angeordnet und auch am Außenumfang des Bodens 37 ist ein O-Ring 40 zwischen dem Außenring 38 und dem Boden 37 festgelegt, um den Druckraum 5, in dem sich der Kolben 6 bewegt, abzudichten.

Im Übrigen besitzt die in Fig. 4 dargestellte Ausführungsform der Kupplungsbetätigungseinrichtung 1 die gleiche Funktion wie die in Fig. 2 dargestellte Ausführungsform, so dass die Erläuterungen zu Fig. 2 auch für Fig. 4 gelten.

Hinsichtlich vorstehend im Einzelnen nicht näher erläuterter Merkmale der Erfindung wird im Übrigen ausdrücklich auf die Ansprüche und die Zeichnung verwiesen.

**Bezugszeichenliste**

| | |
|---|---|
| 1 | Kupplungsbetätigungseinrichtung |
| 2 | Gehäuse |
| 3 | Zylinder |
| 4 | Führungsrohr |
| 5 | Druckraum |
| 6 | Kolben |
| 7 | Boden |
| 8 | Abstandshülse |
| 9 | Öffnung |
| 10 | Versteifungsrippe |
| 11 | Durchlass |
| 12 | Getriebeeingangswelle |
| 13 | Kolbenboden |
| 14 | Versteifungsrippe |
| 15 | Tellerfeder |
| 16 | Kupplungslager |
| 17 | Abstreifer |
| 18 | Nutdichtring |
| 19 | Federeinrichtung |
| 20 | Haltering |
| 21 | Gleithülse |
| 22 | Rohrstückförmiges Außengehäuse |
| 23 | Schmutzschutzring |
| 24 | Bund |
| 25 | Filzring |
| 26 | Permanentmagnet |
| 27 | Wegsensor |
| 28 | Endanschlag |
| 29 | Führungsbänder |
| 30 | Wellendichtring |
| 31 | U-förmiges Ringbauteil |
| 32 | Bund |
| 33 | Umbördelung |
| 34 | Ausnehmung |
| 35 | O-Ring |
| 36 | Absatz |
| 37 | Boden |
| 38 | Außenring |
| 39 | Umbördelung |
| 40 | O-Ring |

## Patentansprüche

1. Einrichtung zur pneumatischen Betätigung einer Fahrzeugkupplung, mit einem Zylinder (3) und einem relativ zum Zylinder (3) verlagerbaren Kolben (6), der an einem Führungsrohr (4) axial geführt ein Kupplungslager (16) zur Betätigung der Kupplung beaufschlägt und zwischen Kolben (6) und Zylinder (3) eine den Kolben (6) in Richtung zur Kupplungs-betätigung vorspannende Federeinrichtung (19) angeordnet ist, wobei, das Führungsrohr (4) und der Zylinder (3) einstückig aus einem Kunststoffwerkstoff ausgebildet sind und der Kolben (6) aus einem Kunststoffwerkstoff ausgebildet ist, wobei zwischen Kolben (6) und Führungsrohr (4) eine Gleithülse (21) angeordnet ist, die zumindest im Kontaktbereich mit dem Führungsrohr (4) aus einem relativ zum Kunststoffwerkstoff des Führungsrohrs (4) nicht abrasiven Kunststoffwerkstoff ausgebildet ist, und zwischen dem Kolben (6) und der Federeinrichtung (19) ein Haltering (20) angeordnet ist, der einen den Zylinder (3) gegen das Führungsrohr (4) abdichtenden Nutdichtring (18) gegen die Gleithülse (21) vorspannt.

2. Einrichtung nach Anspruch 1, **dadurch gekennzeichnet, dass** das Führungsrohr (4) eine rohrstückförmige Innenwand des mit einem rohrstückförmigen Außengehäuse versehenen Zylinders (3) bildet und die Innenwand und das Außengehäuse eine Kolbenlaufbahn bilden.

3. Einrichtung nach einem der vorstehenden Ansprüche, **dadurch gekennzeichnet, dass** der Kolben (6) einen mit Versteifungsrippen (10) versehenen Kolbenboden (13) besitzt und zwischen Kolbenboden (13) und Außengehäuse ein Nutdichtring (18) und ein Abstreifer (17) angeordnet sind.

4. Einrichtung nach einem der vorangehenden Ansprüche, **dadurch gekennzeichnet, dass** die Gleithülse (21) einen mit dem Führungsrohr (4) in Kontakt angeordneten Abstreifer (17) gegen den Kolben (6) beaufschlägt.

5. Einrichtung nach einem der vorstehenden Ansprüche, **dadurch gekennzeichnet, dass** am kupplungsseitigen Endbereich des Führungsrohrs (4) ein einen Endanschlag (28) für die Kolbenverlagerung bildender Anschlagring angeordnet ist.

6. Einrichtung nach einem der vorstehenden Ansprüche, **dadurch gekennzeichnet, dass** am Außengehäuse radial außen im Abstand zueinander angeordnete umlaufende Versteifungsrippen (10) und an einem, eine Fläche zur Anordnung der Einrichtung an einem Getriebe bildenden Boden (7) des Zylinders (3) radial sternförmig nach innen verlaufende Versteifungsrippen (10) angeordnet sind.

7. Einrichtung nach einem der vorstehenden Ansprüche, **dadurch gekennzeichnet, dass** der Kunststoffwerkstoff ein faserverstärkter, insbesondere glasfaserverstärkter Kunststoffwerkstoff auf der Basis eines teilkristallinen, partiell aromatischen Polyamids, insbesondere PA 6T/X ist.

8. Einrichtung nach einem der vorstehenden Ansprüche, **gekennzeichnet durch** einen Schmutzschutzring (23), der die Kolbenlaufbahn topfförmig übergreift und der Schmutzschutzring (23) zwischen Kolben (6) und einem vom Kolben (6) beaufschlagten Lagerring des Kupplungslagers (16) festgelegt ist und zwischen einer Zylinderaußenwand und einer Innenwand des Schmutzschutzrings (23) ein Schmutzabstreifer (17), insbesondere ein Filzring (25) angeordnet ist.

9. Einrichtung nach Anspruch 8, **gekennzeichnet durch** einen am Außenumfang des Schmutzschutzrings (23) angeordneten Permanentmagneten (26), der mit einem an der Einrichtung befestigten Wegsensor (27) zur Ermittlung der Verfahrposition des Kolbens (6) relativ zum Zylinder (3) zusammen arbeitet.

10. Einrichtung nach einem der vorstehenden Ansprüche, **gekennzeichnet durch** eine am Zylinder (3) vorgesehene Öffnung (9) für die Befüllung des Druckraums des Zylinders (3) mit vorzugsweise Druckluft zur Druckbeaufschlagung des Kolbens (6).

## Claims

1. Device for the pneumatic actuation of a vehicle clutch, having a cylinder (3) and having a piston (6) which is movable relative to the cylinder (3) and which, guided axially on a guide tube (4), exerts load on a clutch bearing (16) in order to actuate the clutch, and a spring device (19) which preloads the piston (6) in the direction for clutch actuation is arranged between the piston (6) and cylinder (3), wherein the guide tube (4) and cylinder (3) are formed in one piece from a plastics material and the piston (6) is formed from a plastics material, wherein a sliding sleeve (21) is arranged between the piston (6) and guide tube (4), which sliding sleeve is formed, at least in the region of contact with the guide tube (4), from a plastics material which is non-abrasive relative to the plastics material of the guide tube (4), and between the piston (6) and spring device (19) there is arranged a retaining ring (20) which preloads a groove sealing ring (18), which seals off the cylinder (3) against the guide tube (4), against the sliding sleeve (21).

2. Device according to Claim 1, **characterized in that** the guide tube (4) forms a tube-piece-shaped inner wall of the cylinder (3) which is provided with a tube-piece-shaped outer housing, and the inner wall and the outer housing form a piston raceway.

3. Device according to one of the preceding claims, **characterized in that** the piston (6) has a piston crown (13) provided with stiffening ribs (10), and a groove sealing ring (18) and a scraper (17) are arranged between the piston crown (13) and outer housing.

4. Device according to one of the preceding claims, **characterized in that** the sliding sleeve (21) loads a scraper (17), which is arranged in contact with the guide tube (4), against the piston (6).

5. Device according to one of the preceding claims, **characterized in that** a stop ring which forms an end stop (28) for the piston movement is arranged on the clutch-side end region of the guide tube (4).

6. Device according to one of the preceding claims, **characterized in that** encircling stiffening ribs (10) arranged spaced apart from one another are arranged radially at the outside on the outer housing, and stiffening ribs (10) which run radially inward in a star shape are arranged on a base (7), which forms a surface for the arrangement of the device on a transmission, of the cylinder (3).

7. Device according to one of the preceding claims, **characterized in that** the plastics material is a fibre-reinforced, in particular glass-fibre-reinforced plastics material based on a semicrystalline, partially aromatic polyamide, in particular PA 6T/X.

8. Device according to one of the preceding claims, **characterized by** a dirt guard ring (23) which engages in a pot-shaped manner over the piston raceway, and the dirt guard ring (23) is fixed between the piston (6) and a bearing ring, which is subjected to load by the piston (6), of the clutch bearing (16), and a dirt scraper (17), in particular a felt ring (25), is arranged between a cylinder outer wall and an inner wall of the dirt guard ring (23).

9. Device according to Claim 8, **characterized by** a permanent magnet (26) which is arranged on the outer circumference of the dirt guard ring (23) and which interacts with a travel sensor (27), which is fastened to the device, for the determination of the movement position of the piston (6) relative to the cylinder (3).

10. Device according to one of the preceding claims, **characterized by** an opening (9), which is provided on the cylinder (3), for the charging of the pressure chamber of the cylinder (3) with preferably compressed air for the exertion of pressure load on the piston (6).

## Revendications

1. Dispositif destiné à l'actionnement pneumatique d'un embrayage de véhicule, comprenant un cylindre (3) et un piston (6) déplaçable par rapport au cylindre (3), qui, de manière guidée axialement sur un tube de guidage (4), sollicite un palier d'embrayage (16) pour l'actionnement de l'embrayage, et, entre le piston (6) et le cylindre (3), étant disposé un dispositif de ressort (19) qui précontraint le piston (6) dans la direction de l'actionnement de l'embrayage, le tube de guidage (4) et le cylindre (3) étant réalisés d'une seule pièce en un matériau en plastique et le piston (6) étant réalisé en un matériau en plastique, un manchon coulissant (21) étant disposé entre le piston (6) et le tube de guidage (4), lequel manchon coulissant est réalisé au moins dans la région de contact avec le tube de guidage (4), en un matériau en plastique non abrasif par rapport au matériau en plastique du tube de guidage (4), et une bague de retenue (20) étant disposée entre le piston (6) et le dispositif de ressort (19), laquelle précontraint contre le manchon coulissant (21) une bague d'étanchéité à rainures (18) réalisant l'étanchéité du cylindre (3) contre le tube de guidage (4).

2. Dispositif selon la revendication 1, **caractérisé en ce que** le tube de guidage (4) forme une paroi interne en forme de pièce tubulaire du cylindre (3) pourvu d'un boîtier extérieur en forme de pièce tubulaire et la paroi interne et le boîtier extérieur forment une piste de roulement du piston.

3. Dispositif selon l'une quelconque des revendications précédentes, **caractérisé en ce que** le piston (6) possède un fond de piston (13) pourvu de nervures de renforcement (10) et une bague d'étanchéité à rainures (18) et un racloir (17) sont disposés entre le fond de piston (13) et le boîtier extérieur.

4. Dispositif selon l'une quelconque des revendications précédentes, **caractérisé en ce que** le manchon coulissant (21) sollicite un racloir (17) disposé en contact avec le tube de guidage (4) contre le piston (6).

5. Dispositif selon l'une quelconque des revendications précédentes, **caractérisé en ce qu'**une bague de butée formant une butée de fin de course (28) pour le déplacement du piston est disposée au niveau de la région d'extrémité côté accouplement du tube de guidage (4).

6. Dispositif selon l'une quelconque des revendications précédentes, **caractérisé en ce que** des nervures de renforcement (10) périphériques disposées radialement à l'extérieur à distance l'une de l'autre sont disposées sur le boîtier extérieur et **en ce que** des nervures de renforcement (10) s'étendant vers l'intérieur sous forme stellaire radialement sont disposées sur un fond (7) du cylindre (3) formant une surface pour l'agencement du dispositif sur une transmission.

7. Dispositif selon l'une quelconque des revendications précédentes, **caractérisé en ce que** le matériau en plastique est un matériau en plastique renforcé par des fibres, en particulier renforcé par des fibres de verre à base de polyamide partiellement cristallin, partiellement aromatique, en particulier du PA 6T/X.

8. Dispositif selon l'une quelconque des revendications précédentes, **caractérisé par** une bague de protection contre les salissures (23) qui vient en prise par le dessus en forme de pot avec la piste de roulement du piston, la bague de protection contre les salissures (23) étant fixée entre le piston (6) et une bague de palier du palier d'accouplement (16) sollicitée par le piston (6), et un racloir de protection contre les salissures (17), en particulier une bague en feutre (25), étant disposé entre une paroi extérieure du cylindre et une paroi interne de la bague de protection contre les salissures (23).

9. Dispositif selon la revendication 8, **caractérisé par** un aimant permanent (26) disposé sur la périphérie extérieure de la bague de protection contre les salissures (23), lequel aimant permanent coopère avec un capteur de position (27) fixé sur le dispositif pour détecter la position de déplacement du piston (6) par rapport au cylindre (3).

10. Dispositif selon l'une quelconque des revendications précédentes, **caractérisé par** une ouverture (9) prévue sur le cylindre (3) pour le remplissage de l'espace de pression du cylindre (3) avec de préférence de l'air comprimé en vue de solliciter le piston (6) en pression.
